# EUROPÄISCHE PATENTSCHRIFT

(11) **EP 1 848 058 B1**
(45) Veröffentlichungstag und Bekanntmachung des Hinweises auf die Patenterteilung: **03.10.2012**
(21) Anmeldenummer: 06008315.1
(22) Anmeldetag: 21.04.2006
(51) Int. Cl.: H01M 16/00, H01M 8/04

(54) **Stromversorgungssystem mit Reformer-Brennstoffzellen-System und Gleichspannungswandler**
Power supply system comprising reformer, fuel cell and DC/DC converter
Système d'alimentation comprenant reformeur, pile à combustible et convertisseur continu/continu

(43) Veröffentlichungstag der Anmeldung: 24.10.2007
(73) Patentinhaber: Truma Gerätetechnik GmbH & Co. KG, 85640 Putzbrunn (DE)
(72) Erfinder: Schiegl, Andreas, 82041 Oberhaching (DE); Frank, Reinhard, 80331 München (DE)
(74) Vertreter: Müller - Hoffmann & Partner

(56) Entgegenhaltungen:
- DE-A1- 4 431 747
- DE-A1-102004 020 266
- US-B1- 6 214 484
- US-B1- 6 590 370

## Beschreibung

Die Erfindung betrifft gemäß dem Oberbegriff von Patentanspruch 1 ein Stromversorgungssystem mit einem Reformer-Brennstoffzellen-System.

Es sind Stromversorgungssysteme bekannt, die in Fahrzeugen, insbesondere Freizeitfahrzeugen, wie Reisemobilen. Booten und Yachten eingesetzt werden. Derartige Stromversorgungssysteme werden auch als Auxiliary Power Units (APU) bezeichnet. Bei derartigen APU-Systemen kommen zunehmend Reformer-Brennstoffzellen-Systeme zum Einsatz, die über einen Gleichspannungswandler (DC/DC-Wandler) mit einer Zusatz- bzw. Bordbatterie des Fahrzeugs verschaltet sind. Ein Reformer-Brennstoffzellen-System weist üblicherweise einen Reformer zum Umwandeln von Kohlenwasserstoffen in ein wasserstoffhaltiges Gas und mindestens eine Brennstoffzelle zum Erzeugen von elektrischer Energie aus dem wasserstoffhaltigen Gas auf. Eine derartige Anordnung ist z. B. aus der DE 199 32 781 bekannt.

Dabei kann das Reformer-Brennstoffzellen-System dazu genutzt werden, einerseits die Bordnetzversorgung des Fahrzeugs zu gewährleisten und andererseits die Batterie aufzuladen, die ihrerseits ebenfalls zur Bordnetzversorgung dienen kann.

Der Begriff "Brennstoffzelle" wird nachfolgend zur Vereinfachung auch für eine Einheit von mehreren gestapelten Einzel-Brennstoffzellen, also z. B. einen Brennstoffzellen-Stack verwendet.

Der Gleichspannungswandler dient dazu, die von der Brennstoffzelle gelieferte Energie in einer für den Verbraucher geeigneten Weise anzupassen. Dazu kann der Gleichspannungswandler als Hoch- oder Tiefsetzsteller ausgebildet sein. Bevorzugt wird dabei ein Hochsetzsteller eingesetzt, da hierdurch die Anzahl der Einzelbrennstoffzellen in einem Brennstoffzellen-Stack gering gehalten werden kann.

Das Eingangs-Spannungsniveau des Hochsetzstellers, also die von der Brennstoffzelle gelieferte Arbeitsspannung, ergibt sich aus der Anzahl der Einzelzellen im Brennstoffzellen-Stack multipliziert mit der Einzelzellen-Betriebsspannung. Diese Betriebsspannung liegt üblicherweise zwischen 0,5 und 0,65 V, so dass sich bei einem Brennstoffzellen-Stack von z. B. elf Zellen eine Arbeitsspannung von z. B. 6 V ergeben kann. Der Hochsetzsteller kann diese Eingangs-Spannung dann auf eine Ausgangs- bzw. Betriebsspannung von z. B. 12 V hochsetzen. Selbstverständlich kann das System auch für andere Bordnetzspannungen (z. B. 24 V, 42 V) ausgelegt sein.

Bei einer Verschlechterung der Brennstoffzellen-Performance, z. B. durch verringerte Gaszufuhr aus dem Reformer oder Vergiftung des Katalysators in der Brennstoffzelle durch CO, sinkt die von der Brennstoffzelle erzeugte elektrische Leistung. Bei aus dem Stand der Technik bekannten Stromversorgungssystemen versucht der Gleichspannungswandler stets, einen bestimmten Strom von der Brennstoffzelle zu beziehen. Da jedoch aufgrund der Verschlechterung der Brennstoffzellen-Performance die insgesamt zur Verfügung stehende Abgabeleistung sinkt, wird zwangsläufig die von der Brennstoffzelle geforderte Spannung verringert. Wenn jedoch die an der Brennstoffzelle anliegende Spannung zu niedrig wird, besteht die Gefahr, dass einzelne Zellen im Stack umgepolt werden. Zudem kann der elektrische Wirkungsgrad der Brennstoffzelle nicht mehr aufrechterhalten werden, was einen wirtschaftlichen Betrieb der Brennstoffzelle kaum möglich macht.

Aus der US 6,590,370 B1 ist ein Stromversorgungssystem mit einer Brennstoffzelle und einem Gleichspannungswandler bekannt, wobei die Ausgangsspannung der Brennstoffzelle dadurch konstant gehalten wird, dass mit Hilfe einer Leistungsregelung des Gleichspannungswandlers der entnommene Strom geregelt wird. Der Gleichspannungswandler zieht dementsprechend so viel Strom, wie erforderlich ist, um die Ausgangsspannung der Brennstoffzelle konstant zu halten.

Ein ähnliches Spannungsversorgungssystem ist aus der DE 44 31 747 A1 bekannt.

Wenn das Reformer-Brennstoffzellen-System zum Laden der Batterie genutzt wird, ist einerseits ein Einschalt-Kriterium für das Reformer-Brennstoffzellen-System zu definieren, um eine Tiefentladung der Batterie zu vermeiden. Andererseits muss für den Ladevorgang eine Obergrenze, wie z. B. das Erreichen der Batteriegasungsspannung (z. B. 14,2 V oder 14,4 V), vorgegeben werden, um Batteriebeschädigungen oder Elektrolyse in der Batterie weitestgehend zu vermeiden.

In der DE 199 32 781 wird eine Parallelschaltung zwischen einer Brennstoffzelle und einer Batterie für die Bordnetzversorgung von Kraftfahrzeugen beschrieben. Neben dem bekannten Starten und Abschalten des Ladevorgangs anhand einer unteren und einer oberen Batteriespannungsgrenze ist eine Aktivierung der Brennstoffzelle bei Überschreiten einer voreinstellbaren Bordnetzlast möglich.

Bei diesem System besteht der Nachteil, dass bereits ein kurzzeitiges Überschreiten der voreingestellten Bordnetzlast - z. B. durch Benutzen eines Haarföhns in einem Reisemobil - die Last bzw. der Entladestrom, der an der Batterie anliegt, den vorgegebenen Grenzwert übersteigt, während die Batteriespannung einen bestimmten, vorgegebenen Wert unterschreitet. In diesem Fall wird sofort das APU-System gestartet und das Reformer-Brennstoffzellen-System aktiviert. Auf diese Weise genügen bereits kurzzeitige Lastpeaks von wenigen Sekunden bis Minuten, um das Reformer-Brennstoffzellen-System in Betrieb zu setzen. Dies ist jedoch meist nicht erforderlich, da die Kurzzeit-Lastpeaks zwar zu einer kurzzeitigen deutlichen Absenkung des Batteriespannungsniveaus führen, jedoch die Batterieladung nur unwesentlich verringert wird. Die Batteriespannung steigt nach Abschalten der Last wieder an. Somit werden häufige und unnötige Starts des Reformer-Brennstoffzellen-Systems verursacht, die den Gesamtwirkunggrad vermindern und der Lebensdauer nicht zuträglich sind.

Der Erfindung liegt die Aufgabe zugrunde, ein Stromversorgungssystem anzugeben, bei dem die Nachteile des Standes der Technik vermieden werden.

Die Aufgabe wird erfindungsgemäß durch ein Stromversorgungssystem gemäß Anspruch 1 gelöst. Weiterhin werden Betriebsverfahren für das Stromversorgungssystem angegeben.

Ein erfindungsgemäßes Stromversorgungssystem weist einen mit der Brennstoffzelle eines Reformer-Brennstoffzellen-Systems verschalteten Gleichspannungswandler auf, zum Bereitstellen einer vorgegebenen Ausgangsspannung aufgrund der von der Brennstoffzelle erzeugten Spannung. Dabei ist ein Arbeitsspannungs-Wert als Zielwert für die von der Brennstoffzelle zu erzeugende Spannung vorgegeben. Erfindungsgemäß ist der Gleichspannungswandler derart gestaltet, dass eine eingangsseitige untere Grenzspannung des Gleichspannungswandlers im Wesentlichen dem Arbeitsspannungs-Wert entspricht.

Die Gleichsetzung von unterer Grenzspannung und Arbeitsspannung bewirkt, dass bei einer Verschlechterung der Brennstoffzellen-Performance das Spannungsniveau der Brennstoffzelle über den Gleichspannungswandler aufrechterhalten wird, während der Abgabestrom aus der Brennstoffzelle entsprechend einer sich aktuell einstellenden Brennstoffzellen-Kennlinie absinkt. Auf diese Weise lässt sich der elektrische Wirkungsgrad der Brennstoffzelle aufrechterhalten. Die Gefahr des Umpolens einzelner Zellen in einem Brennstoffzellen-Stack wird verringert.

Die untere Grenzspannung ist das Eingangs-Spannungsniveau, das vom Gleichspannungswandler durch seinen Aufbau und seine Bauteile vorgegeben ist. Der Gleichspannungswandler verlangt, mit einer Spannung betrieben zu werden, die wenigstens der unteren Grenzspannung entspricht.

Es ist in diesem Zusammenhang nicht zwingend erforderlich, dass die untere Grenzspannung exakt dem Arbeitsspannungs-Wert entspricht. Vielmehr ist auch eine Abweichung von bis minus 10 Prozent des Arbeitsspannungs-Werts noch zulässig, so dass die untere Grenzspannung den Arbeitsspannungs-Wert innerhalb dieses Toleranzbereichs unterschreiten kann.

Die Gleichsetzung von Arbeitsspannung und unterer Grenzspannung kann auch beim Starten oder Abschalten des Reformer-Brennstoffzellen-Systems genutzt werden. Der Reformer kann nach Erreichen seiner Betriebstemperatur immer erst nach einer gewissen Startphase von einigen Minuten die für die Brennstoffzelle erforderliche Gasmenge zur Verfügung stellen. In dieser Zeit wird bei bekannten Reformer-Brennstoffzellen-Systemen das erzeugte wasserstoffhaltige Gas zumeist in zusätzlichen und auf eine maximale Gasmenge dimensionierten Offgasbrennern thermisch verwertet, jedoch nicht in der Brennstoffzelle verstromt.

Ist jedoch über die erfindungsgemäße Gestaltung des Gleichspannungswandlers (insbesondere Hochsetzstellers) sichergestellt, dass die Spannung der Brennstoffzelle (bzw. des Brennstoffzellen-Stapels) nicht unter das Arbeitsspannungsniveau sinken kann, so steigt nach dem Start des Reformierungsprozesses im Reformer mit zunehmender Menge an wasserstoffhaltigem Gas auch der Abgabestrom der Brennstoffzelle. Damit steigt auch die Abgabeleistung des Gleichspannungswandlers, die von einem Verbraucher genutzt werden kann. Zusätzliche Offgasbrenner können dadurch entweder entfallen oder deutlich kleiner dimensioniert werden, da die ansonsten nicht genutzte Menge an wasserstoffhaltigem Gas jetzt bereits frühzeitig zur Stromerzeugung verwendet werden kann. Auf diese Weise verkürzt sich auch die Startphase des Stromversorgungssystems.

Der gleiche Effekt kann beim Abschalten des Systems genutzt werden, um das Reformer-Brennstoffzellen-System frei von Wasserstoff zu machen. Mit abnehmender Gasmenge bei Beendigung des Reformierungsprozesses sinkt unter Aufrechterhaltung des Arbeitsspannungsniveaus der Abgabestrom der Brennstoffzelle von einem maximalen Stromwert bis idealerweise gegen Null, wenn der komplette Wasserstoff im System (Reformer, Leitungen, Brennstoffzelle) verbraucht ist. Dabei kann es jedoch sinnvoll sein, bei Unterschreitung eines Grenzstrom-Werts die Brennstoffzelle vom Gleichspannungswandler elektrisch zu trennen, um ein eventuelles Umpolen von Einzelzellen aufgrund von Gasunterversorgung zu vermeiden. Der noch im System verbleibende Wasserstoff kann schließlich über ein Trägergas (z. B. Wasserdampf aus dem Verdampfer des Reformers) und/oder andere Spülgase, wie z. B. Luft, ausgetrieben werden.

Demgemäß kann die von der Brennstoffzelle erzeugte elektrische Energie durch den Gleichspannungswandler derart gehandhabt werden, dass bei einer Änderung der von der Brennstoffzelle abgebbaren elektrischen Energie die an der Brennstoffzelle anliegende Spannung im Wesentlichen auf dem Niveau des Arbeitsspannungs-Werts gehalten wird, während der von der Brennstoffzelle durch den Gleichspannungswandler gelieferte Strom in einer der Energieänderung analogen, insbesondere proportionalen Weise geändert wird.

Der Gleichspannungswandler kann mit der Brennstoffzelle und einer Batterie verschaltet sein, so dass die Batterie mit der elektrischen Energie von der Brennstoffzelle geladen werden kann. Die Batterie wird somit Bestandteil des Stromversorgungssystems und ist in der Lage, kurzzeitige Strom- oder Lastanforderungen zu bedienen, ohne dass jedes Mal das Reformer-Brennstoffzellen-System gestartet werden müsste.

Damit ein Starten bzw. Abschalten des Reformer-Brennstoffzellen-Systems ökonomisch durchgeführt werden kann, kann eine Steuervorrichtung vorgesehen sein, mit der ein Starten bzw. Abschalten in Abhängigkeit von einem Betriebszustand der Batterie möglich ist. Die Steuervorrichtung bewirkt ein Starten des Reformer-Brennstoffzellen-Systems dann, wenn der Betriebszustand wenigstens eines der folgenden Startkriterien erreicht hat:
- Überschreiten eines Amperestunden-Grenzwerts für einen über die Zeit integrierten Entladestrom der Batterie. Wie beim Stand der Technik wird somit der Entladestrom der Batterie überwacht. Jedoch erst dann, wenn der über einen gewissen Zeitraum integrierte Entladestrom den vorgegebenen Amperestunden-Grenzwert überschreitet, bewirkt die Steuervorrichtung ein Starten des Reformer-Brennstoffzellen-Systems. In diesem Fall wird davon ausgegangen, dass die Energieentnahme aus der Batterie so groß war, dass es einerseits rentabel ist, das Reformer-Brennstoffzellen-System zu starten und andererseits eine Beschädigung der Batterie - z. B. durch Tiefentladung - zu vermeiden ist. Der Amperestunden-Grenzwert ist dementsprechend derart bemessen, dass zunächst ein erheblicher Teil der in der Batterie gespeicherten Energie entnommen werden muss, bevor das Reformer-Brenristoffzellen-System gestartet wird: Kurzzeitige Lastpeaks, die von der Batteriekapazität problemlos gespeist werden können, lösen auf diese Weise kein Starten des Reformer-Brennstoffzellen-Systems aus.

- Unterschreiten eines unteren Spannungs-Grenzwerts für eine Batteriespannung wenigstens während eines vorbestimmten Unterspannungs-Zeitraums. Bei dieser vereinfachten Variante für ein Start-Kriterium wird alleine die Batteriespannung überwacht. Bei diesem Start-Kriterium muss die Batteriespannung über einen bestimmten Zeitraum (Unterspannungs-Zeitraum) unterhalb des vorgegebenen unteren Spannungs-Grenzwerts anliegen, um ein Starten des Reformer-Brennstoffzellen-Systems zu bewirken.
- Unterschreiten eines Batterieladungs-Grenzwerts durch einen Ladungszustand der Batterie, wobei der Ladungszustand aufgrund des Entladestroms, der gleichzeitig anliegenden Batteriespannung und für die Batterie vorbekannten Batteriekennlinien ermittelbar ist. Bei diesem Start-Kriterium wird davon ausgegangen, dass der Batterietyp und die Batterieeigenschaften bekannt sind. Dementsprechend liegen auch die Batterie-typischen Kennlinien, insbesondere das Verhältnis von Entladestrom, Batteriespannung und Ladungszustand, vor. Für einen gemessenen Entladestrom und eine dabei anliegende Batteriespannung kann über die bekannten Kennlinien auf den Ladungszustand rückgeschlossen werden. Der Ladungszustand kann z. B. prozentual im Verhältnis zu einer Vollladung (100 %) angegeben werden. Dabei ist der Ladungszustand unabhängig von der Zeit. Bei Unterschreiten des vorgegebenen Batterieladungs-Grenzwerts steht fest, dass die Batterie zu einem bestimmten Grad entladen ist, woraufhin das Reformer-Brennstoffzellen-System gestartet werden kann.

Nach dem Starten des Reformer-Brennstoffzellen-Systems wird die Batterie durch das Reformer-Brennstoffzellen-System solange geladen, bis sich das Spannungsniveau der Batterie an die Batteriegasungsspannung annähert. Der zeitliche Verlauf des Ladevorgangs ist abhängig von der Kapazität der Batterie, der Batterietemperatur, der Höhe des Entladestroms durch die elektrischen Verbraucher im Fahrzeug und der Höhe des Ladestroms, den das Reformer-Brennstoffzellen-System zur Verfügung stellen kann.

Bis zum Erreichen der Batteriegasungsspannung erfolgt das Laden mit annähernd konstantem Strom bzw. Leistung. Danach hält der Gleichspannungswandler die Batteriespannung konstant, während der Ladestrom gegen Null sinkt (Erhaltungsladung).

Beim Erreichen der Batteriegasungsspannung beträgt jedoch die Batterieladung z.B. lediglich ca. 70 bis 80 % ihrer Nennkapazität. Erst dann, wenn die Batterie in der nachfolgenden Konstantspannungsphase über mehrere Stunden geladen wird, ist es möglich, die Batterie auf ihre Nennkapazität zu laden.

In der Konstantspannungsphase reduziert sich - wie oben erläutert - der Ladestrom bis gegen Null. In dem Maße, in dem sich der Ladestrom verringert, reduziert sich auch die erforderliche Abgabeleistung des Reformer-Brennstoffzellen-Systems, die zum Laden der Batterie erforderlich ist. Entweder kann das Reformer-Brennstoffzellen-System seine Abgabeleistung anpassen bzw. reduzieren - was vor allem bei Reformer-Brennstoffzellen-Systemen mit geringer Leistung (wenige 100 W) einen unverhältnismäßig hohen Regelungsaufwand erfordert bzw. einen relativ hohen Eigenenergieverbrauch der Peripherieaggregate zur Folge hat - oder es wird im stationären Betrieb unnötig viel wasserstoffhaltiges Gas in dem Reformer erzeugt, welches nicht in der Brennstoffzelle verstromt werden kann. Um einen wirtschaftlichen Betrieb mit hohen (elektrischen) Wirkungsgraden zu gewährleisten, ist es deshalb ergänzend oder alternativ zu den oben definierten Start-Kriterien möglich, dass die Steuervorrichtung ein Abschalten des Reformer-Brennstoffzellen-Systems bewirkt, wenn der Betriebszustand wenigstens eines der folgenden Abschalt-Kriterien erreicht hat:
- Erreichen eines oberen Spannungs-Grenzwerts durch die Batteriespannung und anschließend danach Verstreichen einer vorbestimmten Nachlaufzeit. Demnach wird von der Steuervorrichtung zunächst überwacht, ob der obere Spannungs-Grenzwert durch die Batteriespannung erreicht wird. Der obere Spannungs-Grenzwert kann z. B. der Batterietyp-spezifischen Batteriegasungsspannung entsprechen. Unter einer Batteriegasungsspannung wird üblicherweise ein Spannungswert für eine Batterie verstanden, oberhalb dem der Elektrolyt verstärkt beginnt, sich in seine Bestandteile, insbesondere in Wasserstoff und Sauerstoff, zu zerlegen (Elektrolyse). Es muss dementsprechend vermieden werden, dass die Batterie eine höhere Spannung als die Batteriegasungsspannung erreicht, um dauerhaften Schaden zu vermeiden. Nach dem Erreichen des oberen Spannungs-Grenzwerts wird durch den Gleichspannungswandler lediglich eine Konstantspannung an die Batterie angelegt, die im Wesentlichen der Batteriegasungsspannung entspricht, um eine weitere Erhöhung der Batteriespannung und damit eine Schädigung der Batterie zu verhindern. Die Konstantspannung wird während der vorbestimmten Nachlaufzeit aufrechterhalten, so dass eine verbesserte Batterieladung erreicht werden kann. Nach Ablauf der Nachlaufzeit liegt das Abschalt-Kriterium vor, so dass die Steuervorrichtung das Abschalten des Reformer-Brennstoffzellen-Systems in die Wege leitet.
- Unterschreiten eines unteren Abgabestrom-Grenzwerts durch einen Abgabestrom der Brennstoffzelle während eines vorbestimmten Niedrig-Abgabestrom-Zeitraums. Dieses Kriterium stellt in gewisser Weise eine Umkehrung des oben genannten Abschalt-Kriteriums dar. Wenn die Batteriespannung die Batteriegasungspannung erreicht und daraufhin konstant gehalten wird, sinkt in der nachfolgenden Konstantspannungsphase der Ladestrom der Batterie bis gegen Null. Sofern kein weiterer Verbraucher zugeschaltet ist, sinkt somit auch der Abgabestrom der Brennstoffzelle. Bei Unterschreiten des unteren Abgabestrom-Grenzwerts, der in der Steuervorrichtung vorgegeben werden kann, kann das Reformer-Brennstoffzellen-System abgeschaltet werden.

Dieses Kriterium lässt sich auch dann anwenden, wenn zusätzlich zu der Batterie noch wenigstens ein relevanter Verbraucher zugeschaltet ist, der zumindest einen Teil des Abgabestroms von der Brennstoffzelle erhält. Solange der Verbraucher in nennenswertem Maße Strom von der Brennstoffzelle zieht, soll das Reformer-Brennstoffzellen-System in Betrieb bleiben, auch dann, wenn die Batterie keinen Ladestrom mehr erhält, weil sie vollständig aufgeladen ist. Wenn der Verbraucher hingegen keinen Abgabestrom mehr erhält, weil er z.B. abgeschaltet wurde, kann das Reformer-Brennstoffzellen-System abgeschaltet werden. wenn gleichzeitig auch kein oder nur noch ein geringer Ladestrom zur Batterie fließt.

Gemäß Definition des Abschalt-Kriteriums muss der Abgabestrom den unteren Abgabestrom-Grenzwert während eines vorbestimmten Niedrig-Abgabestrom-Zeitraums unterschreiten. Der Niedrig-Abgabestrom-Zeitraum kann einerseits extrem kurz gewählt werden, so dass bereits ein einmaliges kurzfristiges Unterschreiten des Abgabestrom-Grenzwerts als Abschalt-Kriterium gewertet wird. Ebenso ist es möglich, den Niedrig-Abgabestrom-Zeitraum so zu definieren, dass der Abgabestrom über eine gewisse längere Zeit unter dem Abgabestrom-Grenzwert liegen muss, bis das System abgeschaltet wird.

Anstelle der Überwachung des Abgabestroms kann auch die elektrische Abgabeleistung des Reformer-Brennstoff-Zellen-Systems bzw. des Gleichspannungswandlers überwacht werden. Wenn die elektrische Abgabeleistung einen vorgegebenen Grenzwert unterschreitet, wird dies als Zeichen dafür gewertet, dass die Batterie ausreichend aufgeladen ist und keine relevanten Verbraucher arbeiten. Da es zum Bestimmen der elektrischen Leistung erforderlich ist, den Abgabestrom und die Batteriespannung bzw. Ausgangsspannung des Gleichspannungswandlers zu messen, wird das Überwachen der elektrischen Leistung als identisch zu dem Überwachen des Abgabestroms angesehen. Insofern stellt das Überwachen der elektrischen Abgabeleistung kein eigenständiges Abschalt-Kriterium im Verhältnis zum Überwachen des Abgabestroms dar.
- Unterschreiten eines Nutzungsgrads-Grenzwerts durch einen Gasnutzungsgrad der Brennstoffzelle. Bei diesem Abschalt-Kriterium wird der Gasnutzungsgrad, also das Verhältnis von genutztem zu ungenutztem Wasserstoffanteil im Gas ausgewertet. Wenn der Gasnutzungsgrad zu gering ist, also in der Brennstoffzelle zu wenig des zur Verfügung stehenden Wasserstoffs in Strom gewandelt wird, wird dies als Anzeichen dafür genommen, dass die Batterie weitgehend aufgeladen bzw. relevanter Verbraucher zugeschaltet ist, so dass das Reformer-Brennstoffzellen-System durch die Steuervorrichtung abgeschaltet werden kann.
- Unterschreiten eines Wirkungsgrads-Grenzwerts durch einen elektrischen Wirkungsgrad des Reformer-Brennstoffzellen-Systems. Dieses Abschalt-Kriterium beruht auf der Überwachung des elektrischen Wirkungsgrads, also des Verhältnisses aus dem Energieinhalt der dem Reformer zugeführten Kohlenwasserstoffe und dem von der Brennstoffzelle erzeugten Strom. Wenn zu wenig Strom aus dem dem Reformer-Brennstoffzellen-System zugeführten Brennstoff gewonnen wird, ist ein wirtschaftlicher Betrieb nicht mehr gegeben, so dass das Reformer-Brennstoffzellen-System abgeschaltet werden kann.

Mit dem erfindungsgemäßen Stromversorgungssystem lassen sich Bordbatterien bis zu hohen Kapazitätswerten laden, bei gleichzeitiger sinnvoller wirtschaftlicher Betriebsweise des Reformer-Brennstoffzellen-Systems.

Die Parameter Amperestunden-Grenzwert, unterer Spannungs-Grenzwert, Unterspannungs-Zeitraum, Batterieladungs-Grenzwert, Batteriekennlinien, oberer Spannungs-Grenzwert, Nachlaufzeit, unterer Abgabestrom-Grenzwert, Niedrig-Abgabestrom-Zeitraum, Nutzungsgrad-Grenzwert und/oder Wirkungsgrad-Grenzwert sind in der Steuervorrichtung speicherbar. Sie können sich bei unterschiedlichen Batterietypen unterscheiden. Daher können sie in der Steuervorrichtung den jeweilig unterschiedlichen Batterietypen (Bauart, Kapazität) zugeordnet gespeichert werden. Es ist somit möglich, das Stromversorgungssystem mit unterschiedlichen Batterietypen auszustatten, wobei die Steuervorrichtung in der Lage ist, für den jeweils aktuellen Batterietyp angepasste Start- bzw. Abschaltprozeduren durchzuführen. Die Parameter können z. B. auch in Form von Kennfeldern oder Kennlinien gespeichert sein.

Der Gasnutzungsgrad der Brennstoffzelle ist bestimmt durch das Verhältnis des von der Brennstoffzelle erzeugten elektrischen Stroms zu der Menge an Wasserstoff, der insgesamt von dem Reformer der Brennstoffzelle zugeführt wird. Er entspricht somit dem Verhältnis von genutztem zu ungenutztem Wasserstoffanteil im Gas und ist ein Kriterium für einen wirtschaftlichen Betrieb der Brennstoffzelle.

Das von der Brennstoffzelle verbrauchte wasserstoffhaltige Gas lässt sich in einfacher Weise durch Messen des von der Brennstoffzelle erzeugten Stroms bestimmen. Geht man davon aus, dass der Reformer eine konstante, bekannte Gasmenge zur Verfügung stellt, wird dann, wenn der von der Brennstoffzelle erzeugte Strom sinkt, auch weniger Gas in der Brennstoffzelle verbraucht. Der von der Brennstoffzelle erzeugte Strom ist direkt proportional zu der Gasmenge, die in der Brennstoffzelle verbraucht wird. Somit kann durch Messen des von der Brennstoffzelle erzeugten Stroms direkt auch die von der Brennstoffzelle verbrauchte Gasmenge bestimmt werden.

Der für den Gasnutzungsgrad maßgebliche Nutzungsgrads-Grenzwert kann in einem Bereich von 30 bis 90 %, insbesondere in einem Bereich von 40 bis 60 % liegen. Bei einem Unterschreiten dieses Grenzwerts ist ein wirtschaftlicher Betrieb der Brennstoffzelle kaum noch möglich, weil die Brennstoffzelle zu wenig von dem wasserstoffhaltigen Gas verbraucht, das aufwändig in dem Reformer erzeugt wird.

Der bei dem alternativen Abschalt-Kriterium erforderliche elektrische Wirkungsgrad ist bestimmt durch das Verhältnis des von der Brennstoffzelle erzeugten elektrischen Stroms zu dem Energieinhalt der dem Reformer zugeführten Kohlenwasserstoffe. Sofern z. B. die Kohlenwasserstoffe in Form von Flüssiggas dem Reformer zugeführt werden, lässt sich der elektrische Wirkungsgrad somit aus dem Verhältnis des von der Brennstoffzelle erzeugten Stroms und den Energieinhalt des dem Reformer zugeführten Flüssiggases messen. Die Menge an verbrauchtem Flüssiggas lässt sich in bekannter Weise mit einem Massenstrommesser, etc. bestimmen, während der von der Brennstoffzelle erzeugte Strom durch ein Strommessgerät gemessen wird.

Der Wirkungsgrads-Grenzwert kann in einem Bereich zwischen 0 und 30 %, insbesondere zwischen 5 und 15 % liegen. Unterhalb des Wirkungsgrads-Grenzwerts ist ein wirtschaftlicher Betrieb des Reformer-Brennstoffzellen-Systems nicht mehr gewährleistet.

Die Steuervorrichtung kann mit einer oder mehreren Messvorrichtungen gekoppelt sein, zum Messen von wenigstens einem der oben bereits genannten Messparameter, nämlich Entladestrom, Batteriespannung, von der Brennstoffzelle erzeugter elektrischer Strom, Batterieladestrom, von der Brennstoffzelle verbrauchtes wasserstoffhaltiges Gas und/oder von der Menge der dem Reformer zugeführten Kohlenwasserstoffe. Die Messvorrichtungen werden somit in erster Linie durch Spannungs-, Strom- oder Zeitmessgeräte, aber auch durch andere Messgerättypen realisiert.

Die Batterie kann eine Bordbatterie eines Fahrzeugs sein, die zur Versorgung von elektrischen Verbrauchern, wie Heizungsgebläse, Klimaanlagen, Unterhaltungselektronik und/oder Licht dienen kann. Bei dem Fahrzeug kann es sich um ein Reisemobil, einen Caravan, ein Nutzfahrzeug oder auch um ein Boot oder eine Yacht handeln. Diese Fahrzeuge weisen üblicherweise eine Bordbatterie als Pufferbatterie auf, um kurzfristig eine autarke Stromversorgung zu gewährleisten.

Das erfindungsgemäße Stromversorgungssystem erreicht bevorzugte Leistungsgrößen bis ca. 3 kwₑ₁, insbesondere aber Leistungen zwischen 50 bis 500 Wₑ₁. Als bevorzugte Brennstoffe für das Reformer-Brennstoffzellen-System dienen Propan, Butan bzw. Propan-Butan-Gemische. Jedoch können auch andere flüssige oder gasförmige Kohlenwasserstoff-Verbindungen (z. B. Diesel, Benzin, Methanol und Bio-Treibstoffe) bei entsprechender Brennstoffaufbereitung eingesetzt werden.

Das Reformer-Brennstoffzellen-System besteht außer aus dem Reformer und der Brennstoffzelle üblicherweise noch aus entsprechenden Sub-Systemen, wie Lüftern, Pumpen, Mess-, Steuer- und Regeltechnik. Auch der Gleichspannungswandler wird oft dem Reformer-Brennstoffzellen-System zugerechnet.

Als Arbeitsverfahren für den Reformer sind alle bekannten Reformierungsverfahren geeignet, wie autotherme Reformierung, Dampfreformierung, partielle Oxidation und Cracken.

Als Brennstoffzelle können ebenfalls alle bekannten Typen eingesetzt werden, wobei sich Polymer-Elektrolyt-Membran-Brennstoffzellen als besonders geeignet erwiesen haben. Dabei kann eine Brennstoffzelle auch aus mehreren Einzel-Brennstoffzellen bestehen. Der Begriff "Brennstoffzelle" ist insofern auch üblich für einen Stapel (Stack) von einzelnen Brennstoffzellen.

Der Gleichspannungswandler kann entweder als Hoch- oder als Tiefsetzsteller ausgebildet sein. Geeignet ist vor allem ein Hochsetzsteller, da hierdurch die Anzahl der Einzelbrennstoffzellen in einem Stack gering gehalten werden kann und trotzdem eine ausreichend hohe Betriebsspannung erreicht wird.

Die zum Starten des Reformer-Brennstoffzellen-Systems erforderliche elektrische Energie kann der Batterie entnommen werden.

Ein Betriebsverfahren zum Starten des Stromversorgungssystems stellt sicher, dass bereits beim Starten des Reformer-Brennstoffzellen-Systems die Ausgangsspannung der Brennstoffzelle auf dem Niveau des Arbeitsspannungs-Werts gehalten wird. Ein Erhöhen des Ausgangsstroms der Brennstoffzelle erfolgt in Abhängigkeit von der von der Brennstoffzelle zur Verfügung gestellten elektrischen Energie.

Bei einem Betriebsverfahren zum Abschalten des Stromversorgungssystem wird zunächst der Betrieb des Reformers gestoppt, während gleichzeitig durch den Gleichspannungswandler die Ausgangsspannung der Brennstoffzelle auf dem Niveau des Arbeitsspannungs-Werts gehalten wird. Ein Absenken des Ausgangsstroms der Brennstoffzelle erfolgt in Abhängigkeit von der von der Brennstoffzelle abgebbaren Energie.

Schließlich wird ein Betriebsverfahren für eine erfindungsgemäße Stromversorgungseinrichtung angegeben, welches Vorschriften für ein Starten und/oder ein Abschalten des Reformer-Brennstoffzellen-Systems vorgibt. Zum Starten bzw. Abschalten gelten in analoger Weise die oben bereits erläuterten Start- bzw. Abschalt-Kriterien.

Nachfolgend wird die Erfindung anhand eines Beispiels unter Zuhilfenahme der begleitenden Figuren näher erläutert. Es zeigen:
- **Fig. 1**: in schematischer Weise ein erfindungsgemäßes Stromversorgungssystem für einen elektrischen Verbraucher;
- **Fig. 2**: ein Diagramm, bei dem der Ladestrom und die Ladespannung über die Ladezeit aufgetragen sind; und
- **Fig. 3**: ein Diagramm mit der Änderung einer Brennstoffzellen-Kennlinie beim Starten und Abschalten der Brennstoffzelle.

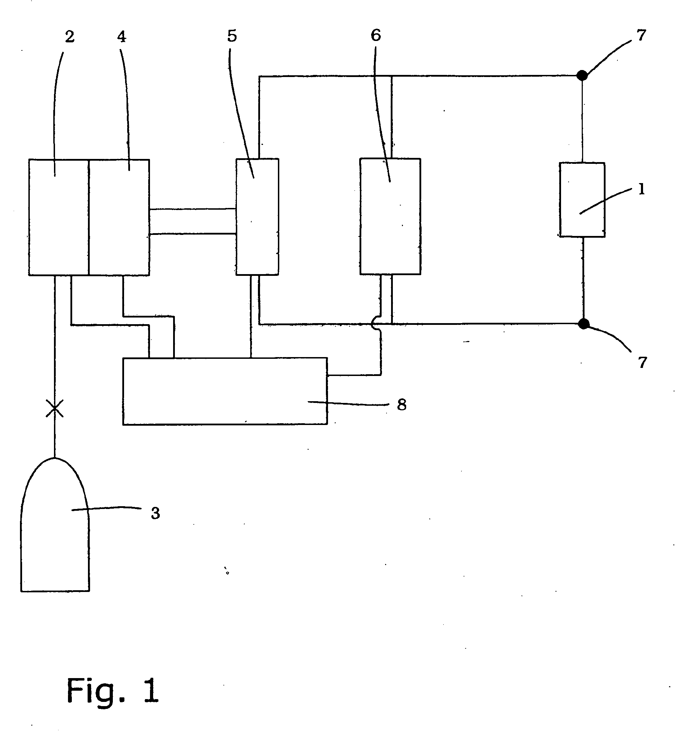

Fig. 1 zeigt in schematischer Darstellung ein erfindungsgemäßes Stromversorgungssystem zur Versorgung eines elektrischen Verbrauchers 1.

Das Stromversorgungssystem weist einen Reformer 2 auf, dem Kohlenwasserstoff, z. B. Propangas, Butangas oder eine Mischung davon, aus einem Brennstoffvorrat 3 zugeführt wird. Der Reformer 2 wandelt die zugeführten Kohlenwasserstoffe in bekannter Weise in ein wasserstoffhaltiges Gas um, das einer Brennstoffzelle 4 zugeleitet wird.

Die Brennstoffzelle 4 ist in bekannter Weise aufgebaut und kann z. B. aus einer Mehrzahl von Einzel-Brennstoffzellen bestehen. Die Brennstoffzelle 4 ist in der Lage, aus dem von dem Reformer 2 zugeführten wasserstoffhaltigen Gas elektrische Energie zu erzeugen, um insbesondere einen elektrischen Strom bei einer Konstantspannung (z. B. 0,55 V pro Einzelzelle) fließen zu lassen. Da der Aufbau und die Funktionsweise einer derartigen Brennstoffzelle 4 bekannt ist, erübrigt sich eine eingehendere Beschreibung.

Die Brennstoffzelle 4 ist mit einem Gleichspannungswandler 5 (DC/DC-Wandler) gekoppelt, der als Hoch- oder Tiefsetzsteller arbeitet.

Unter der Annahme, dass die Brennstoffzelle 4 z. B. aus elf in Reihe geschalteten Einzelzellen besteht, kann die Brennstoffzelle 4 z. B. eine Spannung von 6 V erzeugen. Diese Spannung kann in dem Gleichspannungswandler 5 auf eine Betriebsspannung von 12 V hochgesetzt werden. Entsprechend verringert sich im Gegenzug der nutzbare Strom. Auch andere Spannungswerte sind selbstverständlich möglich.

Mit dem Gleichspannungswandler 5 ist eine Batterie 6 parallel geschaltet, so dass der Gleichspannungswandler 5 mit dem ihm zugeordneten Reforrtier-Brennstoffzellen-System 2, 4 zum Laden der Batterie 6 genutzt werden kann. Die Batterie 6 kann insbesondere eine Bordbatterie in einem Freizeitfahrzeug sein.

Der Gleichspannungswandler 5 und die Batterie 6 sind mit Anschlüssen 7 gekoppelt, an denen der elektrische Verbraucher 1 (oder auch mehrere Verbraucher) angeschlossen werden kann. Somit können der Gleichspannungswandler 5 (mit dem Reformer 2 und der Brennstoffzelle 4) und die Batterie 6 ergänzend oder alternativ zum Versorgen des elektrischen Verbrauchers 1 genutzt werden.

Dem Reformer-Brennstoffzellen-System 2, 4, dem Gleichspannungswandler 5 und der Batterie 6 ist eine Steuervorrichtung 8 zugeordnet, mit der unter anderem ein Starten und/oder Abschalten des Reformer-Brennstoffzellen-Systems 2, 4 in Abhängigkeit von einem Betriebszustand der Batterie bewirkt werden kann. Das Starten oder Abschalten erfolgt dabei dadurch, dass die Steuervorrichtung 8 das Vorliegen von Start- bzw. Abschaltkriterien überprüft.

Gemäß einem ersten Start-Kriterium wird ein Überschreiten eines Amperestunden-Grenzwerts für einen über die Zeit integrierten Entladestrom der Batterie 6 genutzt.

Als zweites, ergänzendes oder alternatives, Start-Kriterium wird ein Unterschreiten des unteren Spannungs-Grenzwerts für die Batteriespannung wenigstens während eines vorbestimmten Unterspannungs-Zeitraums verwendet.

Als drittes, ergänzendes oder alternatives, Start-Kriterium wird ein Unterschreiten eines Batterieladungs-Grenzwerts durch einen Ladungszustand der Batterie genutzt, wobei der Ladungszustand aufgrund des Entladestroms, der gleichzeitig anliegenden Batteriespannung und der für die Batterie vorbekannten und in der Steuervorrichtung 8 hinterlegten Batteriekennlinien ermittelbar ist.

Die Steuervorrichtung 8 kann derart ausgelegt sein, dass sie das Vorhandensein nur eines oder aber auch mehrerer Start-Kriterien überprüft. Wenn das Kriterium erfüllt ist, erkennt die Steuervorrichtung 8, dass die Batterie 6 durch den elektrischen Verbraucher 1 bzw. durch Selbstentladung bereits stark entladen wurde, so dass ein Wiederaufladen der Batterie 6 erforderlich ist. Dementsprechend bewirkt die Steuervorrichtung 8 ein Starten des Reformer-Brennstoffzellen-Systems 2, 4, so dass die Batterie 6 über den Gleichspannungswandler 5 wieder aufgeladen werden kann.

Für das Abschalten des Reformer-Brennstoffzellen-Systems 2, 4 gibt es vier Abschalt-Kriterien, die ergänzend oder alternativ von der Steuervorrichtung 8 überprüft werden:
Gemäß einem ersten Abschalt-Kriterium wird das Erreichen eines oberen Spannungs-Grenzwerts durch die Batteriespannung überprüft, woraufhin durch den Gleichspannungswandler 5 eine Konstantspannung an die Batterie 6 anlegbar ist. Die Konstantspannung wird über einen Zeitraum entsprechend dem Verstreichen einer vorbestimmten Nachlaufzeit aufrechterhalten, um die Batterie 6 weiter aufzuladen. Während dieser Nachlaufzeit reduziert sich bei konstanter Spannung der vom Gleichspannungswandler 5 abgegebene Ladestrom. Auf diese Weise soll ein Überschreiten des z. B. der Batteriegasungsspannung entsprechenden Grenzwertes vermieden werden.

Als zweites Abschalt-Kriterium wird ein Unterschreiten eines unteren Abgabestrom-Grenzwerts durch den Abgabestrom von der Brennstoffzelle 4 während eines vorbestimmten Niedrig-Abgabestrom-Zeitraums verwendet. Hierbei wird berücksichtigt, dass der Abgabestrom im Idealfall bis gegen Null absinkt, wenn die Batterie voll aufgeladen ist. Ein Unterschreiten des Abgabestrom-Grenzwerts wird daher als Indiz dafür genommen, dass die Batterie ausreichend aufgeladen ist.

Als drittes Abschalt-Kriterium wird das Feststellen eines Unterschreitens eines Nutzungsgrads-Grenzwerts durch einen Gasnutzungsgrad der Brennstoffzelle genutzt. Hierbei ist es maßgeblich, welche Menge an wasserstoffhaltigem Gas durch die Brennstoffzelle tatsächlich zur Erzeugung von elektrischem Strom genutzt werden kann.

Als viertes alternatives oder ergänzendes Abschalt-Kriterium wird ein Unterschreiten eines Wirkungsgrads-Grenzwerts durch einen elektrischen Wirkungsgrad des Reformer-Brennstoffzellen-Systems 2, 4 genutzt.

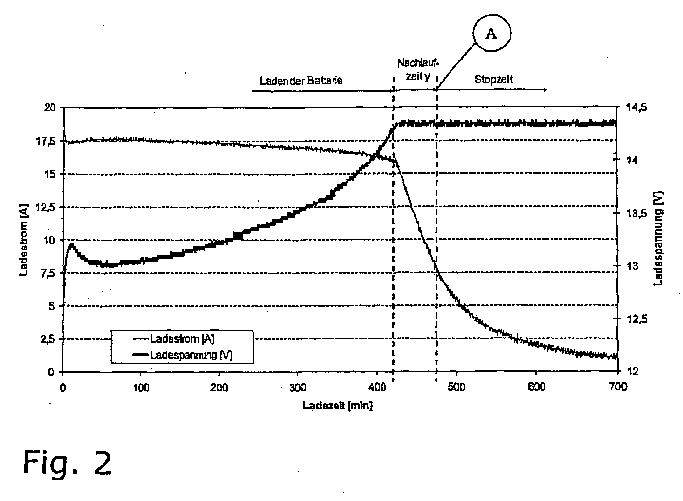

Fig. 2 zeigt die Entwicklung von Ladestrom und Ladespannung bei einem Ladevorgang. So ist erkennbar, dass bei konstanter Ladeleistung der Ladestrom während des Ladens der Batterie leicht sinkt (von ca. 17,5 A auf 16 A), während die Ladespannung von einem verhältnismäßig niedrigen Wert (13 V) auf einen höheren Wert (Batteriegasungsspannung, 14,4 V) steigt.

Sobald die Ladespannung den Batteriegasungsspannungswert erreicht hat, wird das Ladeverfahren geändert. Mit Hilfe des Gleichspannungswandlers 5 wird darauf geachtet, dass die Ladespannung konstant auf dem Wert der Batteriegasungspannung (14,4 V) gehalten wird. Im Gegenzug dazu sinkt der Ladestrom bis fast auf Null, sofern kein Verbraucher 1 Strom aus der Batterie 6 entnimmt.

Nach Verstreichen einer Nachlaufzeit y ist schließlich das Abschalt-Kriterium erfüllt (Markierung "A" in Fig. 2), so dass die Steuervorrichtung 8 das Reformer-Brennstoffzellen-System 2, 4 abschaltet ("Stoppzeit" in Fig. 2). In dieser Phase wird der Betrieb des Reformers 2 eingestellt, während die Brennstoffzelle 4 noch restlichen Wasserstoff verbraucht.

Die Batterie lässt sich auf diese Weise weitgehend auf ihre Nennkapazität aufladen.

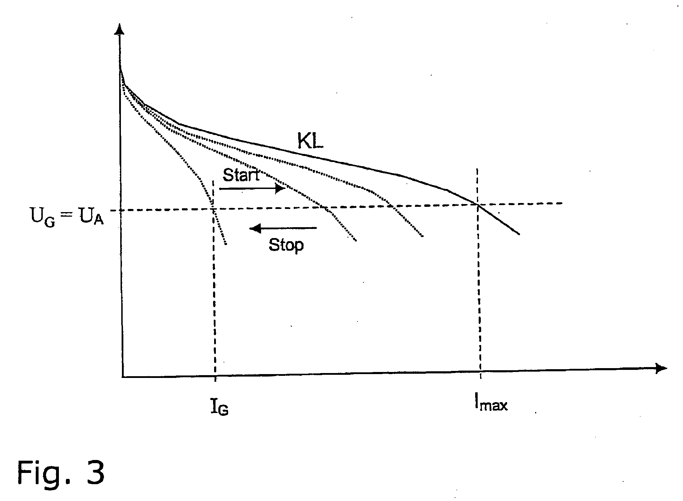

Fig. 3 zeigt die Kennlinie einer Brennstoffzelle, bei der die Spannung der Brennstoffzelle über dem von der Brennstoffzelle gelieferten Strom aufgetragen ist.

Die durchgezogene Linie KL entspricht einer Brennstoffzellen-Kennlinie im normalen Arbeitsbetrieb, bei der im Arbeitspunkt eine Arbeitsspannung U_{A} anliegt und ein Strom Iₘₐₓ abgegeben wird.

Die Brennstoffzelle ist mit einem Gleichspannungswandler verschaltet, der derart gestaltet ist, dass seine untere Grenzspannung U_{G} im Wesentlichen dem Arbeitsspannungs-Wert U_{A} entspricht oder in einem Toleranzbereich von bis zu minus 10 Prozent des Arbeitsspannungs-Werts U_{A} liegt. Dadurch ermöglicht es der Gleichspannungswandler, dass bei einer Änderung der von der Brennstoffzelle erzeugten elektrischen Energie die Spannung im Wesentlichen auf dem Niveau des Arbeitsspannungs-Werts U_{A} gehalten wird. Der von der Brennstoffzelle abgegebene Strom hingegen kann in Abhängigkeit von der von der Brennstoffzelle abgegebenen Leistung geändert werden.

Dieser Vorgang ist in Fig. 3 durch gestrichelte Brennstoffzellen-Kennlinien abgebildet. Beim Abschalten des Reformer-Brennstoffzellen-Systems verlagert sich die Arbeitskennlinie KL durch die Abnahme der elektrischen Energie in Fig. 3 nach links (Pfeilrichtung "Stopp"), so dass für die konstante Arbeitsspannung U_{A} der ursprüngliche Abgabestrom Iₘₐₓ reduziert wird. Theoretisch kann auf diese Weise die Brennstoffzelle unter Beibehaltung der Arbeitsspannung U_{A} bis zu ernem Stromwert Null heruntergefahren werden. Jedoch ist es sinnvoll, eine untere Strom-Grenze I_{G} zu definieren, unterhalb der die Brennstoffzelle keine Leistung mehr abgeben muss.

Beim Starten des Reformer-Brennstoffzellen-Systems erfolgt das Verfahren umgekehrt: Sobald die Brennstoffzelle in der Lage ist, bei einer Arbeitsspannung U_{A} den unteren Grenzstrom I_{G} abzugeben, kann Leistung von der Brennstoffzelle abgezogen werden. Mit zunehmender Versorgung der Brennstoffzelle mit wasserstoffhaltigem Gas und damit Erhöhung der Performance verlagert sich die Kennlinie nach rechts (Pfeilrichtung "Start"), bis schließlich die Betriebskennlinie KL erreicht wird. Der untere Grenzstrom I_{G} muss beim Starten und Abschalten nicht zwangsläufig identisch sein.

## Patentansprüche

1. Stromversorgungssystem, mit
- einem Reformer-Brennstoffzellen-System, mit einem Reformer (2) zum Umwandeln von Kohlenwasserstoffen in ein wasserstoffhaltiges Gas und mit mindestens einer Brennstoffzelle (4) zum Erzeugen von elektrischer Energie aus dem wasserstoffhaltigen Gas in Form einer Spannung und eines Stroms; und mit
- einem mit der Brennstoffzelle (4) verschalteten Gleichspannungswandler (5) zum Bereitstellen einer vorgegebenen Ausgangsspannung aufgrund der von der Brennstoffzelle (4) erzeugten Spannung;
wobei ein Arbeitsspannungs-Wert als Zielwert für die von der Brennstoffzelle im normalen Arbeitsbetrieb zu erzeugende Spannung vorgegeben ist;
**dadurch gekennzeichnet, dass**
- der Gleichspannungswandler (5) derart gestaltet ist, dass die eingangsseitige untere Grenzspannung des Gleichspannungswandlers im Wesentlichen dem Arbeitsspannungs-Wert der Brennstoffzelle (4) entspricht; und dass
- durch den Gleichspannungswandler (5) die von der Brennstoffzelle (4) abgebbare elektrische Energie derart handhabbar ist, dass bei einer Änderung der von der Brennstoffzelle (4) erzeugten elektrischen Energie die von der Brennstoffzelle bereitgestellte Spannung im Wesentlichen auf dem Niveau des Arbeitsspannungs-Werts gehalten wird, während der von der Brennstoffzelle an den Gleichspannungswandler (5) gelieferte Strom in einer der Energieänderung analogen, insbesondere proportionalen Weise geändert wird

2. Stromversorgungssystem nach Anspruch 1, **dadurch gekennzeichnet, dass** die untere Grenzspannung in einem Bereich um den Arbeitsspannungs-Wert liegt, mit einer zulässigen Abweichung von bis zu minus 10 Prozent des Arbeitsspannungs-Werts.

3. Stromversorgungssystem nach einem der Ansprüche 1 oder 2, **dadurch gekennzeichnet, dass** der Gleichspannungswandler (5) mit der Brennstoffzelle (4) und einer Batterie (6) verschaltet ist, zum Laden der Batterie (6) mit der elektrischen Energie von der Brennstoffzelle (4).

4. Stromversorgungssystem nach Anspruch 3, **dadurch gekennzeichnet, dass** eine Steuervorrichtung (8) vorgesehen ist, zum Starten und/oder Abschalten des Reformer-Brennstoffzellen-Systems (2, 4) in Abhängigkeit von einem Betriebszustand der Batterie (6) derart, dass
- die Steuervorrichtung (8) ein Starten des Reformer-Brennstoffzellen-Systems (2, 4) bewirkt, wenn der Betriebszustand wenigstens eines der folgenden Start-Kriterien erreicht hat:
+ Überschreiten eines Amperestunden-Grenzwerts für einen über die Zeit integrierten Entladestrom der Batterie (6);
+ Unterschreiten eines unteren Spannungs-Grenzwerts für eine Batteriespannung wenigstens während eines vorbestimmten Unterspannungs-Zeitraums;
+ Unterschreiten eines Batterieladungs-Grenzwerts durch einen Ladungszustand der Batterie (6), wobei der Ladungszustand aufgrund des Entladestroms, der gleichzeitig anliegenden Batteriespannung und für die Batterie (6) vorbekannten Batteriekennlinien ermittelbar ist;
und/oder dass
- die Steuervorrichtung (8) ein Abschalten des Reformer-Brennstoffzellen-Systems (2, 4) bewirkt, wenn der Betriebszustand wenigstens eines der folgenden Abschalt-Kriterien erreicht hat:
+ Erreichen eines oberen Spannungs-Grenzwertes durch die Batteriespannung und anschließend danach Verstreichen einer vorbestimmten Nachlaufzeit (y);
+ Unterschreiten eines unteren Abgabestrom-Grenzwerts durch einen Abgabestrom der Brennstoffzelle (4) während eines vorbestimmten Niedrig-Abgabestrom-Zeitraums;
+ Unterschreiten eines Nutzungsgrads-Grenzwerts durch einen Gasnutzungsgrad der Brennstoffzelle (4);
+ Unterschreiten eines Wirkungsgrads-Grenzwerts durch einen elektrischen Wirkungsgrad des Reformer-Brennstoffzellen-Systems (2, 4).

5. Stromversorgungssystem nach Anspruch 4, **dadurch gekennzeichnet, dass** während des Verstreichens der vorbestimmten Nachlaufzeit (y) durch den Gleichspannungswandler (5) eine Konstantspannung an die Batterie (6) anlegbar ist, bei gleichzeitig kontinuierlicher Reduzierung des Ladestroms.

6. Stromversorgungssystem nach Anspruch 4 oder 5, **dadurch gekennzeichnet, dass** der obere Spannungs-Grenzwert einem Spannungswert für eine Gasungsspannung der Batterie (6) entspricht.

7. Stromversorgungssystem nach einem der Ansprüche 4 bis 6, **dadurch gekennzeichnet, dass** die Parameter Amperestunden-Grenzwert, unterer Spannungs-Grenzwert, Unterspannungs-Zeitraum, Batterieladungs-Grenzwert, Batteriekennlinien, oberer Spannungs-Grenzwert, Nachlaufzeit, unterer Abgabestrom-Grenzwert, Niedrig-Abgabestrom-Zeitraum, Nutzungsgrads-Grenzwert und/oder Wirkungsgrads-Grenzwert in der Steuervorrichtung gespeichert sind.

8. Stromversorgungssystem nach einem der Ansprüche 4 bis 7, **dadurch gekennzeichnet, dass** die Parameter jeweilig unterschiedlichen Batterietypen zugeordnet gespeichert sind.

9. Stromversorgungssystem nach einem der Ansprüche 4 bis 8, **dadurch gekennzeichnet, dass** der Gasnutzungsgrad der Brennstoffzelle (4) bestimmt ist durch das Verhältnis des von der Brennstoffzelle (4) erzeugten elektrischen Stroms zu der Menge an Wasserstoff, der der Brennstoffzelle (4) zugeführt wird.

10. Stromversorgungssystem nach einem der Ansprüche 4 bis 9, **dadurch gekennzeichnet dass** der Nutzungsgrads-Grenzwert in einem Bereich von 30 bis 90 %, insbesondere in einem Bereich von 40 bis 60 % liegt.

11. Stromversorgungssystem nach einem der Ansprüche 4 bis 10, **dadurch gekennzeichnet, dass** der elektrische Wirkungsgrad bestimmt ist durch das Verhältnis des von der Brennstoffzelle (4) erzeugten elektrischen Stroms zu dem Energieinhalt der dem Reformer (2) zugeführten Kohlenwasserstoffe.

12. Stromversorgungssystem nach einem der Ansprüche 4 bis 11, **dadurch gekennzeichnet, dass** der Wirkungsgrads-Grenzwert in einem Bereich zwischen 0 und 30 %, insbesondere zwischen 5 und 15 % liegt.

13. Stromversorgungssystem nach einem der Ansprüche 4 bis 12, **dadurch gekennzeichnet, dass** die Steuervorrichtung (8) mit einer oder mehreren Messvorrichtungen gekoppelt ist, zum Messen von wenigstens einem der Messparameter Entladestrom, Batteriespannung, von der Brennstoffzelle (4) erzeugter elektrischer Strom, von der Brennstoffzelle (4) verbrauchtes wasserstoffhaltiges Gas und/oder von der Menge der dem Reformer (2) zugeführten Kohlenwasserstoffe.

14. Stromversorgungssystem nach einem der Ansprüche 1 bis 13, **dadurch gekennzeichnet, dass** die Batterie (6) eine Bordbatterie eines Fahrzeugs ist.

15. Stromversorgungssystem nach einem der Ansprüche 1 bis 14, **dadurch gekennzeichnet, dass** die zum Starten des Reformer-Brennstoffzellen-Systems (2, 4) erforderliche elektrische Energie der Batterie (6) entnehmbar ist.

16. Betriebsverfahren zum Starten eines Stromversorgungssystems nach einem der Ansprüche 1 bis 15, mit den Schritten
- Starten des Reformer-Brennstoffzellen-System (2, 4);
- Halten der Ausgangsspannung der Brennstoffzelle (4) auf dem Niveau des Arbeitsspannungs-Werts;
- Ansteigen des Ausgangsstroms der Brennstoffzelle (4) in Abhängigkeit von der von der Brennstoffzelle (4) abgebbaren Energie.

17. Betriebsverfahren zum Abschalten eines Stromversorgungssystems nach einem der Ansprüche 1 bis 15, mit den Schritten
- Stoppen des Betriebs des Reformers (2);
- Halten der Ausgangsspannung der Brennstoffzelle (4) auf dem Niveau des Arbeitsspannungs-Werts;
- Absenken des Ausgangsstroms der Brennstoffzelle (4) in Abhängigkeit von der von der Brennstoffzelle (4) abgebbaren Energie.

18. Betriebsverfahren nach Anspruch 16 oder 17, mit den Schritten
- Starten des Reformer-Brennstoffzellen-Systems (2, 4), wenn der Betriebszustand der Batterie (6) wenigstens eines der folgenden Start-Kriterien erreicht hat:
+ Überschreiten eines Amperestunden-Grenzwerts für einen über die Zeit integrierten Entladestrom der Batterie (6);
+ Unterschreiten des unteren Spannungs-Grenzwerts für die Batteriespannung wenigstens während eines vorbestimmten Unterspannungs-Zeitraums;
+ Unterschreiten eines Batterieladungs-Grenzwerts durch einen Ladungszustand der Batterie (6), wobei der Ladungszustand aufgrund des Entladestroms, der gleichzeitig anliegenden Batteriespannung und für die Batterie (6) vorbekannten Batteriekennlinien ermittelbar ist;
und/oder
- Abschalten des Reformer-Brennstoffzellen-Systems, wenn der Betriebszustand/Ladezustand wenigstens eines der folgenden Abschalt-Kriterien erreicht hat:
+ Erreichen eines oberen Spannungs-Grenzwertes durch die Batteriespannung und anschließend danach Verstreichen einer vorbestimmten Nachlaufzeit (y);
+ Unterschreiten eines unteren Abgabestrom-Grenzwerts durch einen Abgabestrom der Brennstoffzelle (4) während eines vorbestimmten Niedrig-Abgabestrom-Zeitraums;
+ Unterschreiten eines Nutzungsgrads-Grenzwerts durch einen Gasnutzungsgrad der Brennstoffzelle (4);
+ Unterschreiten eines Wirkungsgrads-Grenzwerts durch einen elektrischen Wirkungsgrad des Reformer-Brennstoffzellen-Systems (2, 4).

## Claims

1. Power supply system having:
- a reformer fuel cell system, having a reformer (2) for the purpose of converting hydrocarbons into a gas containing hydrogen and having at least one fuel cell (4) for the generation of electrical energy from the gas containing hydrogen in the form of electrical voltage and current, and having
- a direct current converter (5) connected to the fuel cell (4) for the generation of a predetermined output voltage on the basis of the voltage generated in the fuel cell (4), whereby a working voltage is indicated for the voltage to be generated by the fuel cell in its normal operating status, **characterised in that**:
- the direct voltage converter (5) is so constructed that, on the input side, the lower critical voltage essentially corresponds to the working voltage value of the fuel cell (4), and that
- through the direct voltage converter (5), the electrical energy that can be obtained from the fuel cell (4) can be operated in such a way that, in the event of a change in the level of electrical energy generated by the fuel cell (4), the voltage level predetermined can be maintained essentially at the level of the working voltage value, while the current supplied by the fuel cell to the direct voltage converter (5) is changed in a manner that is analogous to the energy change, especially in a proportional manner.

2. Power supply system according to Claim 1 above, **characterised in that** the lower critical voltage level lies within a range around the working voltage value with a permissible deviation of up to minus 10 percent of the working voltage value.

3. Power supply system according to either Claim 1 or 2 above, **characterised in that** the direct voltage converter 5 is connected to the fuel cell 4 and a battery (6) in order to charge the battery with electrical energy from the fuel cell (4).

4. Power supply system according to Claim 3 above, **characterised in that** a control device (8) is provided for starting and/or switching off the reformer fuel cell system (2, 4) in relation to an operational status of the battery (6) in such a way that:
- the control device (8) initiates a starting of the reformer fuel cell process (2, 4) when the said operational status has reached at least one of the following starting criteria:
+ if a critical ampere-hour value for a discharge current of the battery (6) over time is exceeded;
+ if a lower critical voltage value is not achieved when charging the battery at least during a predetermined under-voltage period;
+ If a critical battery charging value is not achieved by a charging status of the battery (6), whereby the charging status can be established on the basis of the discharge current, the simultaneous battery voltage and the previously known characteristic lines for the battery (6);
and/or that:
- the control device (8) initiates a disconnection of the reformer fuel cell system (2, 4) once the operational status has reached at least one of the following switching off criteria:
+ if an upper critical voltage value is reached through the battery voltage and ultimately after the expiry of a predetermined follow-up period (y);
+ if a delivery current from the fuel cell (4) falls short of a lower critical value of the delivery current during a predetermined low delivery current period;
+ if a gas utilisation rate of the fuel cell (4) falls below a critical utilisation rate;
+ if an electrical efficiency level of the reformer fuel cell system (2, 4) falls short of a critical efficiency level.

5. Current supply system according to Claim 4 above, **characterised in that** during the lapse of the predetermined follow-up time (y), a constant voltage can be applied to the battery (6) through the direct voltage converter (5), while simultaneously continuously reducing the charging current.

6. Current supply system according to Claim 4 or 5 above, **characterised in that** the upper critical voltage value represents a value for the voltage level at the start of gassing of the battery (6).

7. Current supply system according to any of the above Claims 4 to 6, **characterised in that** the parameters critical ampere-hour level, lower critical voltage value, under-voltage period, critical battery charging value, characteristic battery lines, upper critical voltage value, follow-up period, lower critical delivery current value, low delivery current period, critical rate of utilisation value and/or critical efficiency level value are stored in the control device.

8. Current supply system according to any of the above Claims 4 to 7, **characterised in that** the said parameters are stored and allocated respectively to the different types of batteries.

9. Current supply system according to any of the above Claims 4 to 8, **characterised in that** the gas utilisation rate of the fuel cell (4) is determined by the ratio of the electrical current generated by the fuel cell (4) to the quantity of hydrogen that is passed to the fuel cell (4).

10. Current supply system according to any of the above claims 4 to 9, **characterised in that** the critical rate of utilisation value lies within a range of 30 to 90%, and more particularly within a range of 40 to 60%.

11. Current supply system according to any of the above claims 4 to 10, **characterised in that** the electrical rate of efficiency is determined by the ratio of the electrical current generated by the fuel cell (4) to the energy content of the hydrocarbons passed to the reformer (2).

12. Current supply system according to any of the above claims 4 to 11, **characterised in that** the critical efficiency rate lies within the range of 0 and 30%, and more particularly within a range of 5 to 15%.

13. Current supply system according to any of the above Claims 4 to 12, **characterised in that** the control device 8 is coupled with one or more measuring devices for the measurement of at least one of the following parameters: the discharge current, the battery voltage, the electrical current generated by the fuel cell (4), the amount of gas containing hydrogen that is consumed by the fuel cell (4) and/or the quantity of hydrocarbons passed to the reformer 2.

14. Current supply system according to any of the above Claims 1 to 13, **characterised in that** the battery (6) is a normal motor vehicle battery.

15. Current supply system according to any of the above Claims 1 to 14, **characterised in that** the electrical energy required to start the reformer fuel cell system (2, 4) can be taken from the battery (6).

16. Process for starting a current supply system according to any of the above claims 1 to 15, comprising the following steps:
- starting the reformer fuel cell system (2. 4);
- maintaining the output voltage of the fuel cell (4) at the level of the working voltage value;
- increasing the output current of the fuel cell (4) in relation to the energy that can be obtained from the fuel cell (4).

17. Process for switching off a current supply system according to any of the above claims 1 to 15, comprising the following steps:
- stopping the operation of the reformer (2);
- maintaining the output voltage of the fuel cell (4) at the level of the working voltage value;
- lowering the output current of the fuel cell (4) in relation to the energy that can be obtained from the fuel cell (4).

18. Process according to Claim 16 or 17 above, comprising the following steps:
- starting the reformer fuel cell system (2, 4) once the operational status of the battery (6) has reached at least one of the following starting criteria:
+ if a critical ampere-hour value for a discharge current of the battery (6) over time is exceeded;
+ if a lower critical voltage value is not achieved when charging the battery at least during a predetermined under-voltage period;
+ If a critical battery charging value is not achieved by a charging status of the battery (6), whereby the charging status can be established on the basis of the discharge current, the simultaneous battery voltage and the previously known characteristic lines for the battery (6);
and/or
- disconnecting the reformer fuel cell system (2, 4) once the operational status/charging status has reached at least one of the following switching off criteria:
+ if an upper critical voltage value is reached through the battery voltage and ultimately after the expiry of a predetermined follow-up period (y);
+ if a delivery current from the fuel cell (4) falls short of a lower critical value of the delivery current during a predetermined low delivery current period;
+ if a gas utilisation rate of the fuel cell (4) falls below a critical utilisation rate;
+ if an electrical efficiency level of the reformer fuel cell system (2, 4) falls short of a critical efficiency level.

## Revendications

1. Système d'alimentation électrique avec
- un système de piles à combustible à reformeur pourvu d'un reformeur (2) pour transformer des hydrocarbures en gaz contenant de l'hydrogène, et d'au moins une pile à combustible (4) pour produire de l'énergie électrique à partir du gaz contenant de l'hydrogène, sous la forme d'une tension et d'un courant ; et avec
- un convertisseur continu-continu (5), relié à la pile à combustible (4), pour fournir une tension de sortie prédéfinie, sur la base de la tension produite par la pile à combustible (4) ;
étant précisé qu'une valeur de tension de travail est prédéfinie sous la forme d'une valeur cible pour la tension à produire par la pile à combustible lors d'un fonctionnement de travail normal ;
**caractérisé en ce que**
- le convertisseur continu-continu (5) est conçu pour que la tension limite inférieure, côté entrée du convertisseur continu-continu, corresponde globalement à la valeur de tension de travail de la pile à combustible (4) ; et **en ce que**
- grâce au convertisseur continu-continu (5), l'énergie électrique apte à être émise par la pile à combustible (4) est commandée de telle sorte qu'en cas de variation de l'énergie électrique produite par la pile à combustible (4), la tension fournie par celle-ci soit globalement maintenue au niveau de la valeur de tension de travail, tandis que le courant fourni par la pile à combustible au convertisseur continu-continu (5) est modifié d'une manière analogue à la variation d'énergie, en particulier proportionnellement.

2. Système d'alimentation électrique selon la revendication 1, **caractérisé en ce que** la tension limite inférieure est située dans une plage de l'ordre de la valeur de tension de travail, avec un écart autorisé qui va jusqu'à moins 10 pour cent de la valeur de tension de travail.

3. Système d'alimentation électrique selon la revendication 1, **caractérisé en ce que** le convertisseur continu-continu (5) est relié à la pile à combustible (4) et à une batterie (6) pour charger la batterie (6) avec l'énergie électrique de la pile à combustible.

4. Système d'alimentation électrique selon la revendication 3, **caractérisé en ce qu'**il est prévu un dispositif de commande (8) pour démarrer et/ou arrêter le système de piles à combustible à reformeur (2, 4) en fonction d'un état de fonctionnement de la batterie (6) de telle sorte que
- le dispositif de commande (8) provoque un démarrage du système de piles à combustible à reformeur (2, 4) si l'état de fonctionnement a atteint l'un au moins des critères de démarrage suivants :
+ l'état de fonctionnement passe au-dessus d'une valeur limite d'ampère-heure pour un courant de décharge de la batterie (6) intégré sur le temps ;
+ l'état de fonctionnement passe au-dessous d'une valeur limite de tension inférieure pour une tension de batterie au moins pendant une durée de sous-tension prédéfinie ;
+ un état de charge de la batterie (6) passe au-dessous d'une valeur limite de charge de batterie, étant précisé que l'état de charge peut être déterminé sur la base du courant de décharge, de la tension de batterie appliquée en même temps et de courbes caractéristiques de batterie connues préalablement pour la batterie (6) ;
et/ou que
- le dispositif de commande (8) provoque un arrêt du système de piles à combustible à reformeur (2, 4) si l'état de fonctionnement a atteint l'un au moins des critères d'arrêt suivants :
+ la tension de batterie atteint une valeur limite de tension supérieure, puis un temps de retard (y) prédéfini est écoulé ;
+ un courant fourni de la pile à combustible (4) passe au-dessous d'une valeur limite inférieure de courant fourni, pendant une durée prédéfinie de courant fourni faible ;
+ un degré d'utilisation de gaz de la pile à combustible (4) passe au-dessous d'une valeur limite de degré d'utilisation ;
+ un rendement électrique du système de piles à combustible à reformeur (2, 4) passe au-dessous d'une valeur limite de rendement.

5. Système d'alimentation électrique selon la revendication 4, **caractérisé en ce que** pendant l'écoulement du premier temps de retard (y) prédéfini, une tension constante est apte à être appliquée à la batterie (6) par le convertisseur continu-continu (5), avec en même temps une réduction continue du courant de charge.

6. Système d'alimentation électrique selon la revendication 4 ou 5, **caractérisé en ce que** la valeur limite de tension supérieure correspond à une valeur de tension pour une tension de dégagement gazeux de la batterie (6).

7. Système d'alimentation électrique selon l'une des revendications 4 à 6, **caractérisé en ce que** les paramètres constitués par la valeur limite d'ampère-heure, la valeur limite de tension inférieure, la durée de sous-tension, la valeur limite de charge de batterie, les courbes caractéristiques de batterie, la valeur limite de tension supérieure, le temps de retard, la valeur limite inférieure de courant fourni, la durée de courant fourni faible, la valeur limite de degré d'utilisation et/ou la valeur limite de rendement sont mis en mémoire dans le dispositif de commande.

8. Système d'alimentation électrique selon l'une des revendications 4 à 7, **caractérisé en ce que** les paramètres sont mis en mémoire en étant associés à des types de batterie respectifs différents.

9. Système d'alimentation électrique selon l'une des revendications 4 à 8, **caractérisé en ce que** le degré d'utilisation de gaz de la pile à combustible (4) est défini par le rapport du courant électrique produit par la pile à combustible (4) sur la quantité d'hydrogène qui est amené dans celle-ci.

10. Système d'alimentation électrique selon l'une des revendications 4 à 9, **caractérisé en ce que** la valeur limite de degré d'utilisation est située dans une plage de 30 à 90 %, en particulier dans une plage de 40 à 60 %.

11. Système d'alimentation électrique selon l'une des revendications 4 à 10, **caractérisé en ce que** le rendement électrique est défini par le rapport du courant électrique produit par la pile à combustible (4) sur le contenu en énergie des hydrocarbures amenés dans le reformeur (2).

12. Système d'alimentation électrique selon l'une des revendications 4 à 11, **caractérisé en ce que** la valeur limite de rendement est située dans une plage entre 0 et 30 %, en particulier entre 5 et 15 %.

13. Système d'alimentation électrique selon l'une des revendications 4 à 12, **caractérisé en ce que** le dispositif de commande (8) est couplé à un ou plusieurs dispositifs de mesure, pour mesurer l'un au moins des paramètres constitués par le courant de décharge, le courant électrique produit par la pile à combustible, le gaz contenant de l'hydrogène qui est consommé par la pile à combustible (4), et/ou la quantité d'hydrocarbures amenés dans le reformeur (2).

14. Système d'alimentation électrique selon l'une des revendications 1 à 13, **caractérisé en ce que** la batterie (6) est une batterie de bord d'un véhicule.

15. Système d'alimentation électrique selon l'une des revendications 1 à 14, **caractérisé en ce que** l'énergie électrique nécessaire pour démarrer le système de piles à combustible à reformeur (2, 4) peut être prise dans la batterie (6).

16. Procédé d'exploitation pour démarrer un système d'alimentation électrique selon l'une des revendications 1 à 15, avec les étapes qui consistent
- à démarrer le système de piles à combustible à reformeur (2, 4) ;
- à maintenir la tension de sortie de la pile à combustible (4) au niveau de la valeur de tension de travail ;
- à augmenter le courant de sortie de la pile à combustible (4) en fonction de l'énergie apte à être émise par celle-ci.

17. Procédé d'exploitation pour arrêter un système d'alimentation électrique selon l'une des revendications 1 à 15, avec les étapes qui consistent
- à arrêter le fonctionnement du reformeur (2) ;
- à maintenir la tension de sortie de la pile à combustible (4) au niveau de la valeur de tension de travail ;
- à réduire le courant de sortie de la pile à combustible (4) en fonction de l'énergie apte à être émise par celle-ci.

18. Procédé d'exploitation selon la revendication 16 ou 17, avec les étapes qui consistent
- à démarrer le système de piles à combustible à reformeur (2, 4) si l'état de fonctionnement de la batterie (6) a atteint l'un au moins des critères de démarrage suivants :
+ l'état de fonctionnement passe au-dessus d'une valeur limite d'ampère-heure pour un courant de décharge de la batterie (6) intégré dans le temps ;
+ l'état de fonctionnement passe au-dessous de la valeur limite de tension inférieure pour la tension de batterie au moins pendant une durée de sous-tension prédéfinie ;
+ un état de charge de la batterie (6) passe au-dessous d'une valeur limite de charge de batterie, étant précisé que l'état de charge peut être déterminé sur la base du courant de décharge, de la tension de batterie appliquée en même temps et de courbes caractéristiques de batterie connues préalablement pour la batterie (6) ;
et/ou
- à arrêter le système de piles à combustible à reformeur si l'état de fonctionnement/l'état de charge a atteint l'un au moins des critères d'arrêt suivants :
+ la tension de batterie atteint une valeur limite de tension supérieure, puis un temps de retard (y) prédéfini est écoulé ;
+ un courant fourni de la pile à combustible (4) passe au-dessous d'une valeur limite inférieure de courant fourni, pendant une durée prédéfinie de courant fourni faible ;
+ un degré d'utilisation de gaz de la pile à combustible (4) passe au-dessous d'une valeur limite de degré d'utilisation ;
+ un rendement électrique du système de piles à combustible à reformeur (2, 4) passe au-dessous d'une valeur limite de rendement.
